# EUROPEAN PATENT APPLICATION

(11) **EP 0 954 084 A1**
(43) Date of publication of application: **03.11.1999**
(21) Application number: 99104362.1
(22) Date of filing: 04.03.1999
(51) Int. Cl.: H02K 15/085

(54) **Device for the quick change over of wire guiding shrouds in an armature winding machine**

(30) Priority: 28.04.1998 IT PI980033
(71) Applicant: ATOP S.p.A., 50021 Barberino Val d'Elsa (Firenze) (IT)
(72) Inventor: Ponzio, Massimo, 50021 Barberino V. Elsa (Fi) (IT)
(74) Representative: Celestino, Marco

(57) **Abstract**

A device for the quick change of the wire guiding shrouds, in particular for the connection between support and shroud in an armature winding machine for electric motors, comprising a first flange (10) integral to the shroud (1), a second flange (20) integral to the support (5), means for reference (16, 26) between the first and second flange and releasable lock means (12,22,23,24) for the coupling between the first and the second flange. The releasable lock means provide at least a pin (23) rotatable with respect to the second flange (20) having an enlarged end (22) with not circular shape, and a through hole (12) provided in the first flange (10) suitable for allowing the introduction of the enlarged end (22) of the pin (23) when this is in a first angular position about its axis, but being suitable for preventing enlarged end (22) from passing when it is located in a second angular position. The device can be manufactured in a not troublesome way and allows a quick change over of the shrouds with respect to the support assuring at the same time precision of the reference and ease of change.

## Description

### Field of the invention

The present invention relates to the field of special machines and precisely it relates to a device for the quick change of wire guiding shrouds in an armature winding machine for electric motors making.

### Description of the prior art

The use of wire guiding shrouds on armature winding machines for electric motors is well known, mounted on a rotating support and kept still near an armature being wound.

More precisely, such machines normally provide two opposite rotating shafts each having rotating winding arms, or fliers, which deposit the wire coming from a supplier into the slots of an armature for electric motors. At the shaft end the wire guiding shrouds are connected in a rotatable way so that they can be kept still substantially surrounding the armature comprised between them, even if they don't prevent the shaft and the flier from rotating and from winding the wire. The shrouds have side profiles or guiding plates that are shaped so that they provide a guide for the wire in order to lay it down directly into the armature slots.

In order to make the winding machine more flexible, since the shrouds and other devices for supporting and supplying the armature must be replaced when an armature of different shape has to be wound, means are known for a quick change over thereof.

The traditional system provides one or several screws easily accessible so that they can be removed quickly by an operator when changing the shrouds.

In EP217664, in the name of MICAFIL, a coupling without screws between the shroud and the support is described, wherein the rotating shaft is also the support and provides a circular flanged end that slidingly engages in a blind groove made in the shroud. The extraction of the shroud is carried out from the above after having unlocked the head in the groove by means of a releasable blocking elements. This device has the drawback that there is not interposition of an intermediate support with rolling bearings but a direct sliding coupling between the rotating shaft and the shroud, whereby the flange and the groove are subject to be worn.

In EP 484766, in the name of AXIS, further devices are described that provide inclined surfaces and means for releasably locking the shroud and the support. After having coupled them with play the inclined surfaces of the lock means cause the shroud and support to become closer and tightened. This device comprises, contrarily to EP217664, the interposition of a support with a rolling bearing between the shroud and the shaft, but has the drawback that the inclined coupling surfaces cause high working costs in order to obtain a precise reference. In fact, whereas the shroud is replaced at every change over, the support is always the same and for each different shroud a reference surface exactly equal to the support has to be executed, whereby the more this reference surface is complex the more and difficult and expensive is to couple with precision the cooperating surfaces of the shroud and the support.

In a further prior art patent, US 2144477 in the name of Abrams, the shroud is held by the shaft in a releasable way. Such coupling provides a bayonet socket and a locking means having a bolt that protrudes from the shroud that engages in a L-shaped groove provided on the socket. This device allows a quick change over of the shroud even if it requires precise angular reference between support and shroud.

### Summary of the invention

It is therefore object of the present invention to provide a device for the change over of the wire guiding shrouds in an armature winding machine whose production is not troublesome and that allows a quick extraction and replacement of the shrouds from their supports assuring at the same time a precise coupling and an easy operation.

These objects are achieved by the device according to the present invention, for the releasable connection between support and shroud in an armature winding machine, whose characteristic is that it comprises:
- a first flange integral to the shroud,
- a second flange integral to the support,
- reference means between said first and said second flange, and
- releasable lock means for fastening the first and the second flange, the releasable lock means comprising elements movable between a first position, wherein the frontal approach is allowed between the first and second flange, and a second position, wherein the disengagement between the first and second flange is impossible.

The releasable lock means preferably comprise:
- at least a pin rotatable about its own axis with respect to the second flange and having an enlarged end with a not circular shape,
- at least a through hole provided in the first flange allowing the introduction of the enlarged end of said rotatable pin when this is in a first angular position about its axis, and preventing said enlarged end from being extracted when said pin is in a second angular position with respect to its axis.

Alternatively, the rotatable pin belongs to the first flange and the through hole belongs to the second flange.

In a preferred embodiment, the first flange has two through holes and the second flange has two corresponding rotatable pins.

Advantageously, the rotatable pins provide an actuating lever or an actuating knob connected to an end opposite to the enlarged head. Furthermore, always advantageously, the rotatable pins provide resilient means that click when said pins are located in said first position or in said second position, whereby the operator that carries out the shroud change recognises the locking position or the extraction position as the position wherein said click occurs.

Alternatively, or in addition, visual means are provided indicating the angular position of said rotatable pins about said axis.

Preferably, the support comprises a rotating shaft and an intermediate support connecting the rotating shaft and the second flange by rolling bearings.

### Brief description of the drawings

Further characteristics and the advantages of the device according to the invention will be made clearer with the following description of an embodiment thereof, exemplifying but not limitative, with reference to the attached drawings, wherein:
- figure 1 is a cross Sectional view of a first and a second flange of the device according to the present invention for the coupling between a shroud and a rotatable support of an armature winding machine;
- figure 1A is a partial cross sectional view of the releasable locking system between the first and second flange;
- figure 2 is an exploded perspective view of the device of figure 1, wherein only the first and second flanges are shown;
- figure 3 is a perspective view of the flanges of figure 2 in a coupled position;

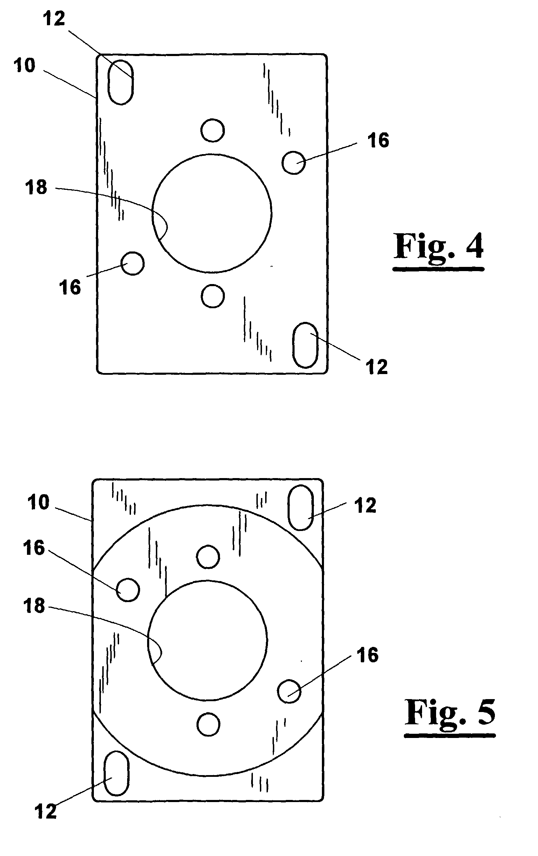

- figures 4 and 5 are a front view and rear view of the first flange of the device,
- figure 6 and figure 7 are a front view and rear view of the second flange of the device according to the present invention.

### Description of the preferred embodiments

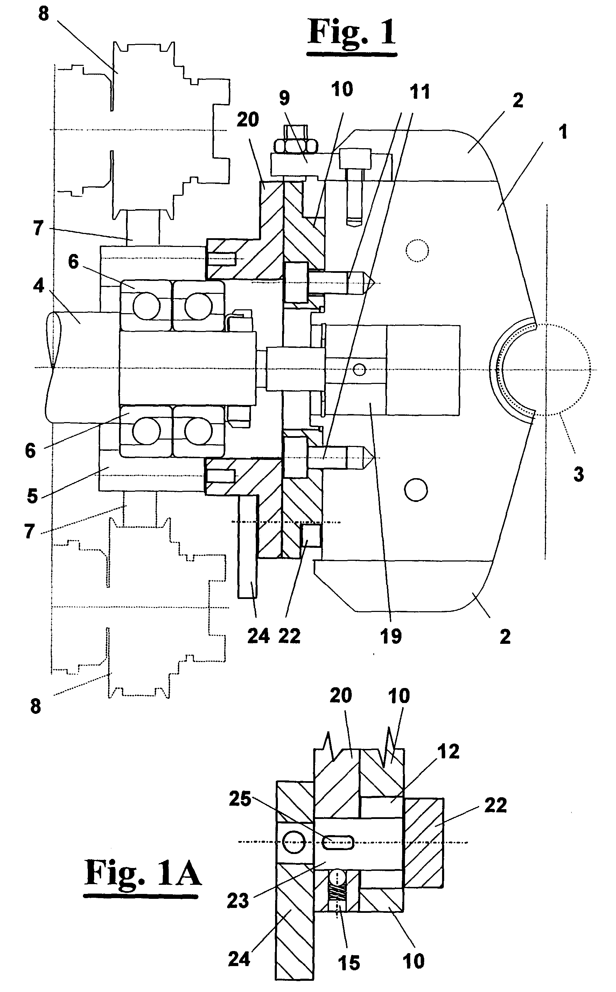

With reference to figure 1, an armature winding machine not shown comprises a shroud 1 having surfaces 2 for guiding the wire being wound on an armature 3. The winding steps and equipment are not described in more detail since well known to a man of the art.

Opposite to guiding surfaces 2 shroud 1 is connected to a first flange 10 by means of screws 11.

Always with reference to figure 1, a rotatable shaft 4, which supports wire winding means not shown, holds still to its end a support 5 by means of bearings 6. More precisely, support 5 is kept still by a toothed belt 7 of an anti-rotation system 8 of known type, which rotates about the support like a planetary gearing. Support 5 is kept integral to a second flange 20 which can be releasably coupled to first flange 10.

According to the invention, with reference also to figures 1A and from 2 to 7, such first flange 10 provides a couple of holes 12, substantially rectangular, suitable for allowing the passage of enlarged ends 22 which are integral to pins 23 pivotally connected to second flange 20 and which are also substantially rectangular.

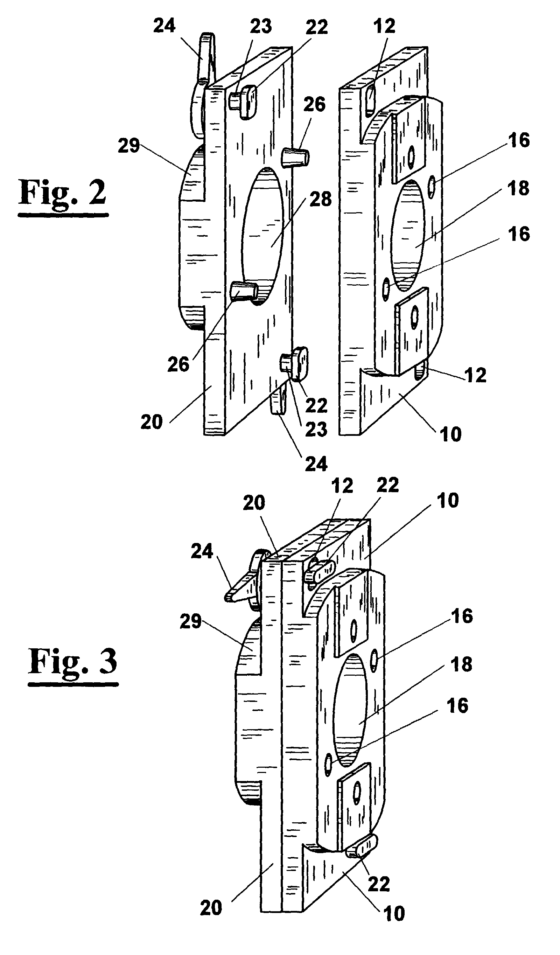

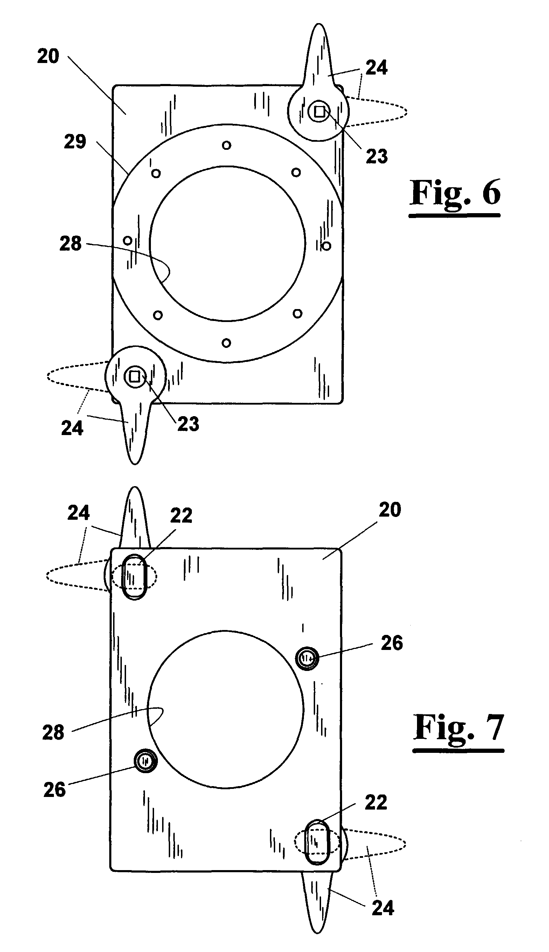

Pins 23 have levers 24 that allow their rotation about axes 23a. The coupling steps for making first flange 10 integral to second flange 20, as better shown in figures 2 and 3, as well as in figures 6 and 7, comprises the arranging of enlarged ends 22 in an angular position with respect to axis of pins 23 in which both enlarged ends 22 can pass through holes 12, crossing them completely and protruding beyond first flange 10. Then, the rotation of pins 23, by means of levers 24, from the first to the second angular position causes the rotation of enlarged ends 22 whereby these cannot be any more extracted back through holes 12, which do not have a circular shape.

Alternatively instead of levers 24 knurled knobs can be in an easier way provided for, which may comprise visual elements on their surface, for example portions of different colours, for indicating to the user the angular position of the enlarged ends 22.

In a not shown way, it is preferable that pins 23 comprises click means 15 that indicate to the operator when enlarged ends 22 are rotated to the second position. Such click means 15 preferably comprise a spring loaded ball pushed against pins 23 and suitable for engaging in a recess 25, corresponding to the locking position of enlarged end 22. Furthermore, the spring loaded ball prevents pin 23 from rotating accidentally in the first position owing to possible vibrations.

For a precise coupling between first flange 10 and second flange 20 many centring means of known type can be provided. Preferably, such centring means comprises two asymmetrical dowels 26 in second flange 20 that engage with corresponding holes 16 provided in first flange 10.

Alternatively, first flange 10 can be executed in order to be mounted on support 5 whereas second flange 20 can be executed in order to be mounted on shroud 1. In other words, pins 23 with enlarged ends 22 can be executed on the removable part that comprises shroud 1, and slotted holes 12 can be executed on the fixed part, integral to support 5.

In order to complete the description, first flange 10 provides a central hole 18 for the passage of a hook cover device 19. Also second flange 20 provides a central hole 28 and a cylindrical enlargement 29 for the connection to support 5 and for the partial housing of bearing 6 and of shaft 4. Finally, shroud 1 has a back bracket 9 for the height adjusting with respect to first flange 10.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A device for the quick change of the wire guiding shrouds (1), and in particular for the connection between support (5) and shroud (1) in an armature winding machine for electric motors, **characterised in that** it comprises:
- a first flange (10) integral to the shroud (1),
- a second flange (20) integral to the support (5),
- means for reference (16, 26) between said first (10) and said second flange (20), and
- releasable lock means (12,22,23,24) for fastening said first (10) and said second flange (20), said releasable lock means (12,22,23,24) comprising elements movable between a first position, wherein the frontal approach is allowed between said first (10) and second flange (20), and a second position in which the disengagement between said first (10) and second flange (20) is impossible.

2. Device according to claim 1, wherein said releasable lock means comprises:
- at least a pin (23) rotatable about its own axis (23a) with respect to the second flange (20) and having an enlarged end (22) with not circular shape,
- at least a through hole (12) provided in the first flange (10), said through hole (12) being suitable for allowing the introduction of the enlarged end (22) of said rotatable pin (23) when this is in a first angular position about its axis (23a), but being suitable for preventing said enlarged end (22) from being extracted from said through hole (12) when said pin (23) is located in a second angular position with respect its axis (23a).

3. Device according to claim 1, wherein said releasable lock means provide,
- at least a pin (23) rotatable about its own axis (23a) with respect to the first flange (10) and having an enlarged end (22) with not circular shape,
- at least a through hole (12) provided in the second flange (20), said hole being suitable for allowing the introduction of the enlarged end (22) of said rotatable pin (23) when this is in a first angular position about its axis (23a), but being suitable for preventing said enlarged end (22) from being extracted from said through hole (12) when said pin (23) is located in a second angular position with respect its axis (23a).

4. Device according to claim 1, wherein said reference means provide dowels (26) on said first or second flange (20) that engage with holes (16) provided on said second or first flange (10) respectively.

5. Device according to claim 5, wherein said rotatable pins (23) comprise an actuating lever (24) or an actuating knob connected to an end opposite to said enlarged end (22).

6. Device according to claim 5, wherein said rotatable pins (23) comprise resilient means (15) that click when said enlarged ends (22) are located in said first or second angular position, whereby the operator that carries out the shroud (1) change recognises the locking position or extraction position respectively by means of said click.

7. Device according to claim 5, wherein visual means are provided indicating the angular position of said rotatable pins (23) about their axis (23a).

8. Device according to claim 1, wherein said support (5) comprises a rotating shaft (4) and an intermediate support (5), located between said rotating shaft (4) and said second flange (20) by means of rolling bearings (6).
